# FASCICULE DE BREVET EUROPEEN

(11) **EP 0 415 829 B1**
(45) Date de publication et mention de la délivrance du brevet: **08.09.1993**
(21) Numéro de dépôt: 90402352.0
(22) Date de dépôt: 24.08.1990
(51) Int. Cl.: B62D 55/075, B62D 55/065

(54) **Véhicule à chenilles inclinables**
Fahrzeug mit schwenkbaren Gleisketten
Vehicle with tiltable endless tracks

(30) Priorité: 31.08.1989 FR 8911465
(43) Date de publication de la demande: 06.03.1991
(73) Titulaire: FRAMATOME, 92400 Courbevoie (FR)
(72) Inventeur: Carra, Olivier, F-26380 Peyrins (FR); Delevallee, Alain, F-69130 Ecully (FR)
(74) Mandataire: Bourely, Paul

(56) Documents cités:
- FR-A- 1 197 800
- FR-A- 2 190 087
- FR-A- 2 523 914
- FR-A- 2 529 157
- US-A- 4 702 331

## Description

La présente invention concerne un véhicule muni de chenilles montées sur des propulseurs inclinables.

Elle trouve notamment application dans des installations industrielles lorsqu'une intervention est nécessaire mais serait dangereuse ou impossible pour un opérateur humain. Un véhicule selon la présente invention peut alors être utilisé. Pour cela il peut être muni d'instruments adéquats tels que des outils, des appareils de mesure, des caméras vidéo etc... ainsi que d'automatismes grâce auxquels il constitue un robot.

Un robot selon la présente invention peut être notamment utile dans une centrale nucléaire ou dans une usine de retraitement de combustible nucléaire lorsque des réparations ou des inspections doivent être faites dans des zones qui sont soumises à de fortes intensités de radiations ionisantes après certains incidents de fonctionnement. De tels robots peuvent cependant être également utiles dans d'autres industries, par exemple dans l'industrie chimique en présence de risques d'explosion, ou pour des missions de sécurité civile ou de surveillance de sites.

Une qualité importante d'un véhicule de ce genre est son aptitude à franchir des obstacles. Les obstacles à franchir peuvent présenter des formes très diverses, par exemple un escalier qui a été prévu pour l'homme et qui doit être monté ou descendu, ou un tuyau tombé sur un plancher, ou un couloir de faible largeur. La sûreté de tels véhicules lors du franchissement de tels obstacles présente deux aspects principaux. L'un est la stabilité, c'est-à-dire l'aptitude du véhicule à ne pas basculer sous son propre poids et celui de sa charge. L'autre est l'adhérence et concerne chacun des propulseurs de ce véhicule, c'est-à-dire des organes qui prennent appui sur le sol pour soutenir et faire progresser ou immobiliser le véhicule. L'adhérence est l'aptitude de ces propulseurs à ne pas glisser excessivement au contact du sol, le mot sol désignant ici l'ensemble des éléments sur lesquels les propulseurs peuvent prendre appui.

Divers véhicules ont été conçus pour présenter une bonne aptitude à franchir avec sûreté de tels obstacles. Un premier véhicule est connu par le brevet européen EP 197 020 des ACEC qui décrit un véhicule téléguidé ou télécommandé constituant un robot pour inspections et interventions en milieux hostiles. Ce robot possède un ensemble moteur, c'est-à-dire des moyens de motorisation et de freinage, qui est intégré dans un châssis principal constituant un corps de véhicule. Il possède donc aussi des moyens pour transmettre le mouvement d'avance défini par cet ensemble moteur à des chenilles qui sont portées à l'extérieur du châssis par des organes de guidage fixés à ce châssis. Ce robot est équipé de deux châssis auxiliaires à l'avant et à l'arrière sur chacun desquels sont montées deux chenilles droite et gauche. Chaque châssis auxiliaire peut être incliné par rapport au châssis principal à partir de celui-ci. De ce fait, si le robot rencontre un obstacle frontal de hauteur modérée et sensiblement constante selon la direction transversale, il pourra le surmonter en conservant une position quasiment horizontale du châssis principal. Si par contre il rencontre un obstacle frontal de forte déclivité transversale, il risque en le franchissant de basculer sur le côté.

Un deuxième véhicule connu se déplace à l'aide de pieds qui ont une configuration de type "araignée" et qui lui permettent de franchir des petits obstacles de formes très variées. Mais il se déplace très lentement parce que chaque déplacement d'un pied de l'appareil doit être terminé avant de commencer celui du pied suivant.

Un troisième véhicule connu comporte quatre propulseurs chenillés inclinables par rapport au corps de ce véhicule. La chenille de chacun de ces propulseurs est guidée par un certain nombre d'organes de guidage, notamment par deux pignons dont l'un est un pignon moteur pour entraîner le mouvement d'avance de cette chenille. Ces organes sont portés par un palonnier qui constitue la structure de ce propulseur et qui est assemblé au corps du véhicule de manière à pouvoir être incliné autour d'un axe transversal. Le corps de ce véhicule porte des ensembles moteurs d'avance et d'inclinaison comportant des moteurs pour entraîner les uns les pignons moteur par l'intermédiaire de systèmes de transmission mécaniques et les autres les mouvements d'inclinaison des palonniers, respectivement. Ces ensembles comportent aussi des freins pour contrôler ces mouvements. Le corps du véhicule porte en outre des batteries d'alimentation en énergie électrique et des moyens de commande pour les ensembles moteurs.
Ce troisième véhicule connu a été proposé par la firme japonaise Mitsubishi sous le nom de MRV (Multifunctional Robot Vehicle) et a été décrit pages 425 et 426 du compte rendu de conférence "85 ICAR International Conference on Advanced Robotics, September 9-10, 1985, Tokyo, Japan, organized by : Robotics Society of Japan, The Society of Biomechanisms, Japan Industrial Robot Association".
Il semble permettre de franchir des obstacles de formes connues et sa vitesse moyenne de progression semble pouvoir être bien supérieure à celle du deuxième véhicule connu précédemment mentionné. Il présente cependant une grande complexité mécanique qui apparaît introduire des risques de pannes en service. Or, quand l'intervention d'un tel véhicule est demandée, il est souvent hautement souhaitable qu'elle soit effectuée rapidement ce qui oblige, lorsqu'on veut utiliser un premier véhicule, soit à disposer d'un deuxième véhicule pour pouvoir remplacer immédiatement le premier en cas de panne, soit à prévoir une intervention humaine dans des conditions de danger amenant à prendre des précautions indispensables dont le coût peut être très élevé. De telles obligations sont donc coûteuses. Par ailleurs l'encombrement des ensembles moteurs logés dans le corps du véhicule limite l'espace disponible pour loger les batteries électriques, ce qui limite l'autonomie du véhicule, ou oblige, si l'on veut que l'autonomie soit importante, à munir le véhicule d'un câble d'alimentation le reliant à une source d'énergie électrique fixe.

La présente invention a notamment pour but de permettre de diminuer l'encombrement, le poids et le coût globaux des ensembles moteurs d'avance et d'inclinaison d'un tel véhicule. Elle a également pour but de mettre à profit une telle diminution d'encombrement pour augmenter l'autonomie du véhicule en logeant un volume accru de batteries dans l'espace laissé disponible dans le corps du véhicule.

Elle a encore pour but de mettre à profit une telle diminution d'encombrement pour permettre d'intégrer au moins partiellement ces ensembles moteurs dans les propulseurs du véhicule. Une telle intégration oblige en effet, pour être utile, à concevoir des ensembles moteurs suffisamment puissants qui puissent être montés de manière simple dans le volume limité du propulseur, et cela malgré la complexité d'un tel ensemble qui comporte typiquement un moteur électrique, un réducteur mécanique et un frein à commande électrique. Mais elle présente divers avantages :
- Il n'est plus nécessaire de prévoir des moyens de transmission mécaniques entre le corps du véhicule et le propulseur, mais seulement des moyens de transmission électriques.
- Alors que les pannes les plus probables susceptibles d'empêcher l'utilisation du véhicule affectent les organes mécaniques cinématiques, c'est-à-dire ceux qui comportent des pièces en mouvement relatif, la totalité de ces organes est intégrée dans les propulseurs facilement amovibles et remplaçables, de sorte qu'une telle panne peut être facilement palliée par remplacement du seul propulseur affecté, sous la seule condition de disposer préalablement d'un propulseur de rechange dont le coût est beaucoup plus faible que celui du véhicule entier. De plus, dans le cas d'un véhicule télécommandé typique muni de quatre propulseurs, si un propulseur de ce véhicule tombe en panne dans une zone inaccessible à l'homme, par exemple parce que fortement contaminée par des produits radioactifs, il est possible de ramener le véhicule dans une zone accessible à l'homme à l'aide des trois propulseurs qui restent opérationels. Il est même le plus souvent possible d'éviter ce faisant que le propulseur défaillant frotte sur le sol. Il suffit pour cela d'incliner convenablement les trois propulseurs opérationels tout en diminuant autant que possible l'inclinaison du propulseur défaillant. Lorsque le véhicule est arrivé dans la zone accessible à l'homme, le propulseur défaillant est remplacé et le véhicule est à nouveau opérationnel.
- Le corps du véhicule et les propulseurs peuvent être transportés et stockés indépendamment, ce qui facilite la logistique des interventions

La présente invention a encore pour but d'améliorer la sureté du véhicule lors des franchissements d'obstacles qui s'accompagnent de mouvements d'inclinaison des propulseurs.

Selon cette invention de tels buts peuvent être atteints à l'aide d'un véhicule à chenilles inclinables dans lequel un mouvement d'inclinaison d'un propulseur est aidé par un mouvement d'avance effectué par la chenille de ce propulseur dans un sens de rotation opposé à celui de ce mouvement d'inclinaison.

Un tel mouvement d'avance de la chenille peut avoir plusieurs effets avantageux qui dépendent de la vitesse de ce mouvement et d'une vitesse neutre qui sera définie ci-après. Ces effets dépendent plus précisément d'une vitesse différentielle qui est égale à la vitesse de ce mouvement diminuée de ladite vitesse neutre et qui est positive ou négative selon que la vitesse de ce mouvement est supérieure ou inférieure à cette vitesse neutre.

Cette vitesse neutre est la vitesse de défilement que devrait avoir la chenille par rapport au propulseur pendant le mouvement d'inclinaison pour que cette chenille s'appuie sur le sol sans glisser, c'est-à-dire pour que la vitesse absolue de la chenille soit nulle en son point d'appui sur le sol. Cette vitesse neutre est proportionnelle à la vitesse du mouvement d'inclinaison et elle dépend aussi de la position du point d'appui de la chenille sur le sol, par rapport à l'axe d'articulation du propulseur, ceci dans le cas où le corps du véhicule n'a pas de mouvement horizontale.
- Un premier effet avantageux est la suppression des forces de frottement qui s'exerceraient entre le sol et la chenille si cette dernière n'avait aucun mouvement d'avance. Compte tenu du fait que les chenilles sont prévues pour s'accrocher autant que possible au sol (elles sont par exemple constituées de caoutchouc et munies de crampons), de telles forces sont importantes et constitueraient une gêne considérable pour le mouvement d'inclinaison. Elles obligeraient donc à utiliser des moyens d'entraînement d'inclinaison puissants.
- Un deuxième effet avantageux apparait lorsque le mouvement d'inclinaison en cours est un mouvement élévateur qui tend à abaisser le point d'appui de la chenille sur le sol par rapport au corps du véhicule c'est-à-dire à élever le corps du véhicule en luttant contre la pesanteur. Il nécessite que la vitesse du mouvement d'avance de la chenille soit supérieure à la vitesse neutre, ou lui soit égale mais tende à lui être supérieure en raison du couple appliqué par le moteur d'avance (vitesse différentielle positive ou nulle). Cet effet est une aide à l'inclinaison en ce sens que l'effort appliqué à la chenille par le moteur d'avance tend à aider le mouvement d'inclinaison du propulseur. Il diminue donc le couple que le moteur d'inclinaison doit appliquer pour réaliser le mouvement d'inclinaison élévateur souhaité. Il permet ainsi de diminuer la puissance de ce moteur, donc son encombrement et/ou son poids et/ou son coût.
- Un troisième effet avantageux est un effet d'adhérence qui apparait surtout lorsque la vitesse différentielle réalisée est nulle ou très faible. Il augmente la force maximale d'aide à l'inclinaison qui peut être appliquée, dans le cadre du deuxième effet ci-dessus, par un moteur d'avance suffisamment puissant. Cela résulte du fait bien connu que les valeurs maximales des forces tangentielles de frottement qui peuvent s'exercer entre deux corps en appui mutuel sont les plus grandes, à force d'appui normale inchangée, tant qu'il n'y a pas de glissement relatif de ces deux corps.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence.

Ces figures représentent :
- Figure 1 : vue de profil d'un premier véhicule d'intervention selon la présente invention,
- Figure 2 : vue de dessus de ce véhicule,
- Figure 3 : vue de face d'un propulseur de ce véhicule d'intervention,
- Figure 4 : vue de dessus de ce propulseur après enlèvement de la chenille et de certains pignons de guidage pour faire apparaître un pignon d'entraînement, une articulation et un pignon de guidage d'extrémité,
- Figures 4A, 4B, 4C : vues de dessus en coupe diamétrale à échelle agrandie de ce pignon d'entraînement, de cette articulation et de ce pignon de guidage,
- Figure 5 : vue de dessus en coupe des moyens d'assemblage du palonnier de ce propulseur au corps du véhicule,
- Figure 6 : vue de face en coupe des raccords de ces moyens d'assemblage,
- Figure 7 : vue d'un détail des moyens de commande centraux de ce véhicule, en schéma par blocs,
- Figure 8 : vue de face de ce véhicule d'intervention dans un passage en déclivité,
- Figure 9 : vue de profil de ce véhicule d'intervention dans le passage de la figure 8,
- Figure 10 : vue de principe de dessus des pignons d'un propulseur d'un deuxième véhicule d'intervention selon la présente invention comportant un seul moteur par propulseur chenillé inclinable,
- Figure 11 : vue de face de certains des pignons de la figure 10.

On va d'abord indiquer diverses dispositions qui sont de manière générale préférées selon la présente invention et qui sont appliquées dans le premier véhicule d'intervention mentionné ci-dessus selon cette invention, sauf indication contraire. Mais il doit être compris que certains autres véhicules selon cette invention pourraient n'appliquer que certaines de ces dispositions. Tel est d'ailleurs le cas du deuxième véhicule selon la présente invention mentionné ci-dessus.

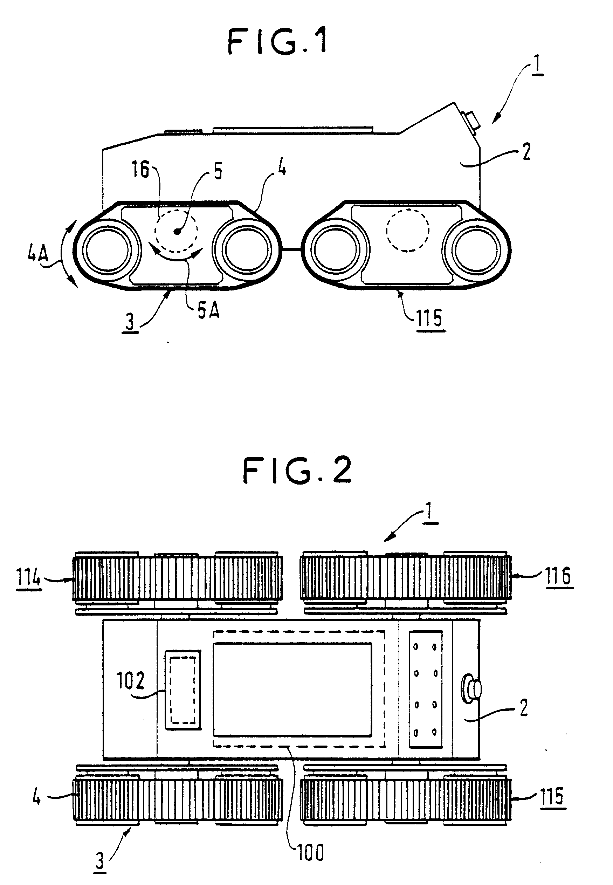

Une de ces dispositions préférées est commune à ces deux véhicules selon la présente invention et au troisième véhicule connu précédemment mentionné (MRV). On pourra se référer aux figures 1 à 5.

Selon cette disposition commune le véhicule comporte :
- un corps de véhicule 2
- plusieurs propulseurs 3 assemblés audit corps de véhicule pour exercer des actions de portage et de propulsion dudit véhicule, chacun de ces propulseurs présentant une longueur selon un axe longitudinal 12 et comportant :
- une chenille 4 prenant appui sur le sol et animée d'un mouvement d'avance en boucle (par exemple tout autour de ce propulseur) dans un plan contenant cet axe longitudinal pour déplacer ce propulseur par rapport au sol,
- des organes de guidage de chenille 6, 7, 9, 10 pour guider ledit mouvement d'avance de ladite chenille,
- un pignon moteur 6 pouvant avoir un mouvement de rotation pour entraîner ledit mouvement d'avance de ladite chenille de manière à réaliser ladite action de propulsion,
- un palonnier 18 pour porter lesdits organes de guidage et ledit pignon moteur 6,
- et des moyens d'assemblage de palonnier pour assembler ce palonnier audit corps de véhicule 2, ces moyens comportant une articulation 16 permettant un mouvement d'inclinaison de ce palonnier par rapport à ce corps par rotation autour d'un axe d'articulation 5 de direction transversale.

Ce véhicule comporte encore :
- des moyens d'entraînement d'avance 22, 23, et des freins d'avance 21 correspondant chacun à l'un desdits propulseurs pour respectivement entraîner et limiter la rotation dudit pignon moteur 6 de ce propulseur,
- des moyens d'entraînement d'inclinaison 38, 37, et des freins d'inclinaison 36A correspondant chacun à l'un desdits propulseurs pour respectivement entraîner et freiner ledit palonnier de ce propulseur dans lesdits mouvements d'inclinaison,
- des moyens d'alimentation en énergie 100,
- et des moyens de commande 102, 13 pour fournir des signaux de commande auxdits moyens d'entraînement et freins d'avance et d'inclinaison, ces moyens de commande comportant des moyens de commande centraux 102 portés par ledit corps du véhicule pour fournir des signaux de coordination propres à coordonner les actions de portage et de propulsion desdits propulseurs.

Certaines dispositions sont communes aux deux dits véhicules selon la présente invention :

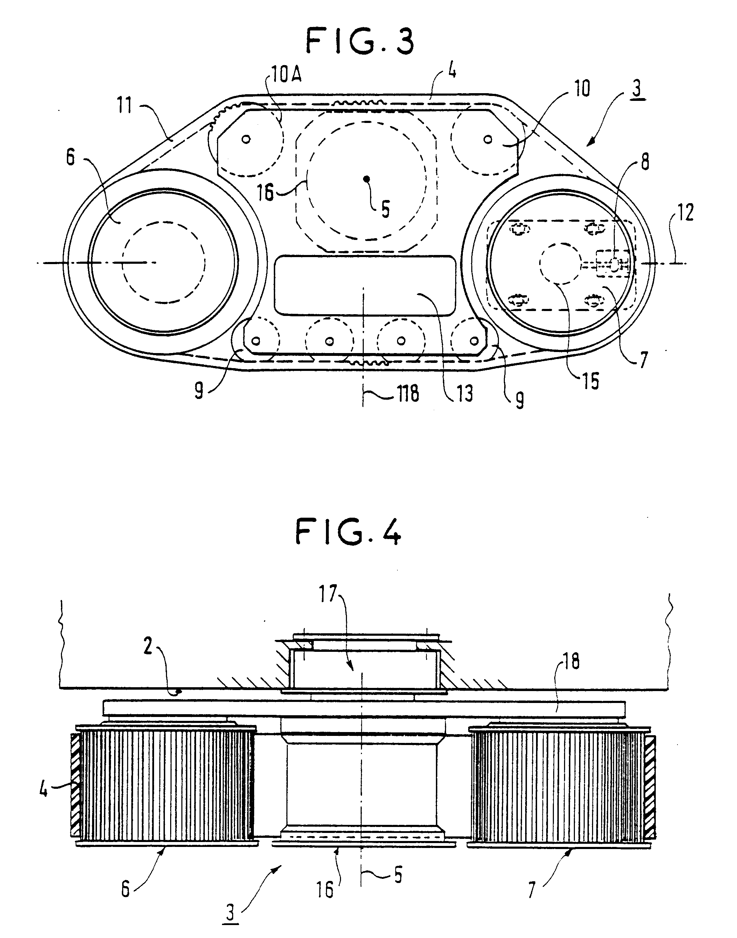

Le véhicule comporte quatre propulseurs qui sont des propulseurs avant droit 114, avant gauche 3, arrière droit 116 et arrière gauche 115, ladite chenille 4 de chacun de ces propulseurs étant symétrique par rapport à un plan vertical transversal médian 118 (figure 3) passant par ledit axe d'articulation 5, lesdits propulseurs avant droit et arrière droit étant symétriques desdits propulseurs avant gauche et arrière gauche.

Le véhicule comporte des moyens d'aide à l'inclinaison 130 qui agissent chaque fois que lesdits moyens d'entraînement d'inclinaison 38, 37 correspondant à un propulseur 3 sont commandés pour provoquer un dit mouvement d'inclinaison présentant un sens de rotation, ces moyens d'aide à l'inclinaison agissant alors pour faire tourner ledit pignon moteur 6 correspondant à ce propulseur dans le sens de rotation qui est opposé à celui du mouvement d'inclinaison dudit palonnier de ce propulseur.

Les dits moyens d'aide à l'inclinaison 130 agissent pour faire tourner ledit pignon moteur 6 à une vitesse au moins égale à une vitesse neutre qui éviterait tout glissement de la dite chenille 5 par rapport au sol pendant ledit mouvement d'inclinaison.

Selon une disposition qui est commune audit troisième véhicule connu et audit premier véhicule selon la présente invention, lesdits moyens d'entraînement d'inclinaison 38, 37 comportent des moteurs d'inclinaison 38 commandés par lesdits moyens de commande centraux 102 pour entraîner lesdits mouvements d'inclinaison, lesdits moyens d'entraînement d'inclinaison et ledit frein d'inclinaison 36A correspondant à un même dit propulseur constituant un ensemble moteur d'inclinaison correspondant à ce propulseur. Les dits moyens d'entraînement d'avance comportent alors un moteur d'avance qui constitue, avec ledit frein d'avance, un ensemble moteur d'avance.

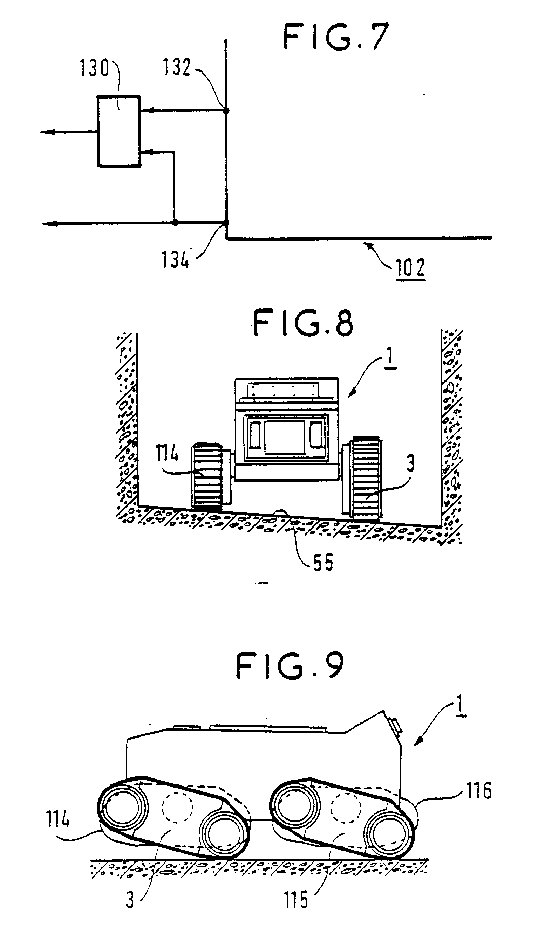

D'autres dispositions sont appliquées seulement dans ledit premier véhicule selon la présente invention :
- lesdits moyens de commande 102, 13 comportent, en correspondance avec chaque dit propulseur 3 :
- une sortie d'avance 132 (voir figure 7) pour fournir un signal de commande d'avance,
- une sortie d'inclinaison 134 pour fournir un signal de commande d'inclinaison,
- et un circuit d'aide à l'inclinaison 130 pour recevoir ledit signal de commande d'inclinaison, et pour fournir en réponse un signal d'aide à l'inclinaison éventuellement combiné audit signal de commande d'avance, ce circuit constituant partiellement lesdits moyens d'aide à l'inclinaison. Ces moyens de commande peuvent être essentiellement portés, en ce qui concerne chaque propulseur, dans ce propulseur lui-même. Ils comportent cependant, pour assurer la coordination des mouvements des divers propulseurs, des éléments de coordination qui sont portés par le corps du véhicule et qui seront appelés ci-après moyens de commande centraux et désignés par la référence 102. Ils pourraient cependant aussi être entièrement portés par le corps du véhicule.

Ledit véhicule comporte encore, en correspondance avec chacun desdits propulseurs, des moyens 108, 110, 43, 44, 45, 46 pour transmettre lesdits signaux de commande d'avance et d'aide à l'inclinaison audit moteur d'avance 22, 23 et ledit signal de commande d'inclinaison audit moteur d'inclinaison 38, 37. Dans le cas ou un propulseur doit pouvoir effectuer un mouvement d'inclinaison en réponse à un signal de commande d'inclinaison alors que le corps de véhicule a un mouvement de déplacement horizontal qui s'accompagne d'une vitesse de progression de ce propulseur en réponse à un signal de commande d'avance, le circuit d'aide à l'inclinaison 130 combine les signaux de commande d'avance et d'aide à l'inclinaison pour que la vitesse du mouvement d'avance de la chenille soit la somme de cette vitesse de progression et d'une vitesse d'aide à l'inclinaison prévue pour aider le moteur d'inclinaison. Mais il doit être compris que l'aide à l'inclinaison sera limitée ou supprimée dans le cas où elle présenterait des inconvénients.

Ledit circuit d'aide à l'inclinaison 130 fournit ledit signal d'aide à l'inclinaison sous la forme d'un signal de commande de vitesse imposant audit moteur d'avance 22, 23 d'entraîner ledit pignon moteur 6 à une vitesse d'aide à l'inclinaison déterminée par lesdits moyens de commande 102. Cette vitesse peut alors être égale, en mètres par seconde, au produit d'une vitesse d'inclinaison du propulseur, exprimée en radians par seconde, par un rayon d'appui du propulseur exprimé en mètres, ce rayon pouvant être prédéterminé et pouvant être un rayon d'appui maximal égal à la plus grande distance possible entre un point d'appui de la chenille 4 sur le sol et l'axe d'articulation 5 du palonnier 18.

Selon une disposition alternative à la précédente, ledit circuit d'aide à l'inclinaison 130 fournit ledit signal d'aide à l'inclinaison sous la forme d'un signal de commande de couple imposant audit moteur d'avance 22, 23 d'appliquer audit pignon moteur 6 un couple déterminé par lesdits moyens de commande 102, 13. Ce couple est déterminé de manière à éviter un risque de glissement de la chenille sur le sol, cette disposition alternative présentant l'avantage d'améliorer l'adhérence du propulseur au sol.

Lesdits ensembles moteurs d'avance 22, 23, 21 et d'inclinaison 38, 37, 36A correspondant à un dit propulseur 3 sont montés sur ledit palonnier 18 de ce propulseur, lesdits moyens d'assemblage de palonnier comportant, outre ladite articulation 16, un dispositif de fixation amovible 17 permettant d'effectuer facilement une succession de retraits et d'assemblages de ce palonnier par rapport audit corps de véhicule 2.

Ce véhicule comporte encore, en correspondance avec chacun desdits propulseurs, des moyens de transmission 108, 110, 44, 45, pour transmettre au moins lesdits signaux de coordination entre lesdits moyens de commande centraux 102 portés par ledit corps de véhicule 2 et ledit propulseur, ces moyens de transmission comportant des éléments déformables 110 pour supporter lesdits mouvements d'inclinaison et des fiches de connexion complémentaires séparables 44, 45 pour permettre à ces moyens de fonctionner à nouveau après un retrait provisoire de ce palonnier. Le montage des ensembles moteurs sur le palonnier est tel que les moyens d'assemblage et l'ensemble moteur d'inclinaison portent, guident et entraînent le palonnier et que ce dernier porte et guide le pignon moteur ainsi que l'ensemble moteur d'avance qui entraîne ce pignon. Chacun de ces ensembles moteurs comporte par exemple un moteur électrique, un réducteur de vitesse mécanique et un frein à commande électrique, mais le réducteur et le frein pourraient être éventuellement réalisés autrement ou ailleurs. Quant aux éléments déformables des moyens de transmission ce sont par exemple des fils souples.

Lesdits moyens d'alimentation en énergie 100 sont portés par ledit corps de véhicule 2, lesdits moyens de transmission 108, 110, 43, 44, 45, 46 étant aussi prévus pour transmettre auxdits ensembles moteurs d'avance 22, 23, 21 et d'inclinaison 38, 37, 36A l'énergie qui leur est nécessaire. Ces moyens d'alimentations en énergie sont par exemple des batteries électriques. Le fait que le corps du véhicule n'ait pas à loger les ensembles moteurs permet d'y loger un volume important de batteries pour augmenter l'autonomie du véhicule.

Chaque dit propulseur 3 est sensiblement contenu dans un volume plat compris entre deux plans verticaux longitudinaux passant par les bords de ladite chenille 4.

Ledit palonnier 18 présente la forme générale d'une plaque dont la surface a une longueur selon ladite direction longitudinale 12 et une hauteur, ledit corps de véhicule 2 se trouvant d'un côté interne de cette plaque, lesdits organes de guidage 6, 7, 9, 10, pignon moteur 6 et ensembles moteurs 22, 23, 21, 38, 37, 36A étant montés sur ce palonnier d'un côté externe de cette plaque.

Ladite articulation de palonnier 16 comporte :
- un moyeu d'articulation 34 tubulaire présentant un axe constitué par ledit axe d'articulation 5 et formant un volume central situé au moins majoritairement dudit côté externe dudit palonnier 18 entre une extrémité externe ouverte et une extrémité interne disposée en regard dudit corps de véhicule 2, cette extrémité interne constituant une partie d'un conduit d'articulation 106 s'étendant selon cet axe,
- une cage d'articulation 39 entourant coaxialement ledit moyeu d'articulation et portant ledit palonnier 18,
- et des paliers 39A, 39B (constitués par des roulements à billes) pour guider ladite cage d'articulation en rotation autour dudit moyeu d'articulation,
- ledit dispositif de fixation d'articulation 17 présentant une forme tubulaire et s'étendant coaxialement dans le prolongement dudit moyeu d'articulation pour compléter ledit conduit d'articulation,
- lesdits moyens de transmission comportant :
- des moyens de transmission centraux 108 liés audit corps de véhicule 2,
- des moyens de transmission périphériques 110 liés audit palonnier 18,
- et des moyens de raccordement de transmission 44, 45, passant par ledit conduit d'articulation 106 et situés au voisinage dudit dispositif de fixation d'articulation pour connecter de manière facilement amovible lesdits moyens de transmission périphériques auxdits moyens de transmission centraux.

Ledit dispositif de fixation d'articulation 17 comporte deux raccords tubulaires qui sont un raccord mâle 41 et un raccord femelle 40 et qui sont coaxialement montés l'un à ladite extrémité interne du moyeu d'articulation 34, l'autre audit corps de véhicule 2, ledit raccord femelle 40 comportant des tenons 50 qui forment des saillies radiales vers l'intérieur et qui sont répartis angulairement autour dudit axe d'articulation 5 en laissant entre eux des intervalles de passage, ledit raccord mâle 41 comportant des tenons 52 qui forment des saillies radiales vers l'extérieur et qui sont répartis angulairement autour dudit axe d'articulation en laissant entre eux des intervalles de passage, de manière qu'une dite opération d'assemblage puisse se faire d'abord par une opération de pénétration coaxiale dudit raccord mâle dans ledit raccord femelle avec passage desdits tenons de chacun de ces raccords par lesdits intervalles de passage de l'autre, puis par une opération de rotation d'assemblage au cours de laquelle l'un de ces raccords tourne par rapport à l'autre d'un angle de rotation d'assemblage autour dudit axe d'articulation 5 jusqu'à amener les tenons de chacun de ces raccords en coïncidence angulaire avec ceux de l'autre pour empêcher une extraction dudit raccord mâle, une dite opération de retrait se faisant par les opérations inverses.

L'un des deux dits raccords tubulaire 40 est monté rotatif de manière que ladite opération de rotation d'assemblage soit une rotation affectant seulement ce raccord. Une rotation intempestive de ce raccord est empêchée de manière connue par frottement ou par encliquetage. Cette opération de rotation d'assemblage est effectuée à l'aide d'une clé à fourche plate que l'on fait passer dans l'intervalle plat qui existe entre le palonnier 18 et la paroi en regard du corps de véhicule 2.

Lesdits moyens de raccordement de transmission comportent deux bases de raccordement de transmission portées l'une 43 par ledit moyeu d'articulation 34 l'autre 46 par ledit corps de véhicule 2 en regard l'une de l'autre coaxialement autour dudit axe d'articulation 5, chacune de ces bases 43 portant des fiches de connexion 44 réparties angulairement autour de cet axe et aptes à coopérer avec des fiches de connexion complémentaires 45 portées par l'autre de ces bases 46 pour permettre la transmission desdits signaux de commande.

Ledit ensemble moteur d'inclinaison 38, 37, 36A est au moins partiellement disposé coaxialement dans ledit volume central du moyeu d'articulation 34, cet ensemble prenant appui d'une part sur ce moyeu et d'autre part, en passant à travers ladite extrémité externe ouverte de ce moyeu, sur ladite cage d'articulation 39 pour entraîner ou freiner la rotation de cette cage par rapport à ce moyeu.

Ledit pignon moteur 6 est muni :
- d'un moyeu d'entraînement 19 tubulaire à axe transversal formant un volume central entre une extrémité interne fixée audit palonnier 18 et une extrémité externe ouverte,
- et de paliers 26, 26' pour guider la rotation de ce pignon autour de ce moyeu,
- ledit ensemble moteur d'avance 22, 23, 21 étant au moins partiellement disposé coaxialement dans ledit volume central du moyeu d'entraînement 34, cet ensemble prenant appui d'une part sur ce moyeu et d'autre part, à travers ladite extrémité externe de ce moyeu, sur ledit pignon moteur pour entraîner ou freiner la rotation de ce pignon par rapport à ce moyeu.

Lesdits organes de guidage de chenille 6, 7, 9, 10 comprennent deux pignons crantés qui sont situés aux deux extrémités longitudinalement opposées dudit propulseur 3 et dont des crans coopèrent avec des crans de ladite chenille 4, l'un de ces pignons étant ledit pignon moteur 6, l'autre étant un pignon de guidage d'extrémité à rotation libre 7 et étant muni d'un moyeu de guidage tubulaire 27 à axe transversal formant un volume central entre une extrémité interne fixée audit palonnier 18 et une extrémité externe ouverte, un capteur d'avance 15 étant disposé dans ledit volume central dudit moyeu de guidage et étant reliée d'une part à ce moyeu, d'autre part à ce pignon en passant par ladite extrémité externe de ce moyeu pour fournir un signal de mesure d'avance représentatif de la rotation de ce pignon par rapport à ce moyeu.

Ledit propulseur comporte en outre une tige de transmission d'inclinaison 70 s'étendant selon ledit axe d'articulation 5 d'une extrémité externe fixée à ladite cage d'articulation 39 à travers ladite extrémité externe ouverte dudit moyeu d'articulation 34 jusqu'à une extrémité interne située dans ledit conduit d'articulation 106, et un capteur d'inclinaison 33 fixé entre d'une part ladite extrémité interne de ladite tige de transmission d'inclinaison et d'autre part ledit moyeu d'articulation 34 pour fournir un signal de mesure d'inclinaison représentatif de l'inclinaison dudit palonnier 18, ledit ensemble moteur d'inclinaison 38, 37, 36A entourant ladite tige de transmission d'inclinaison.

On va maintenant décrire plus spécifiquement les éléments du premier véhicule selon la présente invention qui sont représentés sur les figures.
Conformément à la figure 1 un véhicule d'intervention 1 est essentiellement formé d'un corps de véhicule constituant une structure porteuse 2 sur laquelle sont montés quatre propulseurs tels que 3 destinés à entraîner le véhicule par l'intermédiaire de chenilles crantées telles que 4 qui peuvent avoir un mouvement d'avance dans les deux sens opposés selon une flèche 4A. Les structures de ces propulseurs sont constituées par des palonniers qui sont montés autour d'axes d'articulations tels que 5 autour desquels ils sont mobiles indépendamment en rotation selon une flèche 5A. Le profil et les mouvements de chaque propulseur étant ceux de son palonnier, des indications relatives à un propulseur seront parfois données ci-après en se référant seulement à ce palonnier. La structure porteuse 2 est une caisse qui est aménagée pour contenir des batteries 100 (voir figure 2) constituant des moyens d'alimentation en énergie destinés à fournir la puissance nécessaire au fonctionnement du véhicule. Cette caisse contient aussi des moyens de réception radio électrique et d'élaboration des tensions électriques utilisés pour ce fonctionnement, et des moyens de commande centraux 102 commandant la transmission des tensions fournies par ces moyens d'élaboration. La charge en batteries est importante ce qui confère une très importante autonomie au robot constitué à l'aide de ce véhicule. Des consignes de fonctionnement sont transmises au véhicule par voie hertzienne, et la progression du véhicule équipé de caméra est suivie sur un écran de contrôle situé dans une zone protégée accessible à l'homme.

Le véhicule est équipé des dispositifs utiles bien connus des spécialistes tels qu'un dispositif de contrôle de charge, un inclinomètre, un bras mobile pour montage d'outillage, et des moyens de contrôle et/ou d'enregistrement.

Conformément à la figure 3, la chenille crantée 4 est entraînée par un pignon moteur 6 dans un mouvement d'avance autour du palonnier 3. Elle est guidée par un pignon de guidage d'extrémité 7 équipé d'un codeur 15 et d'un système de mise en tension 8 pour la tendre. A la base du palonnier sont placés dans un plan horizontal quatre petits pignons 9 de guidage de la chenille.

En partie supérieure la chenille crantée est guidée par deux autres pignons 10 et 10A. Les génératrices extérieures de ces pignons définissent l'encombrement global du propulseur. Des couvercles 11 fixés sur les pignons maintiennent latéralement la chenille crantée sur le propulseur.

Le propulseur en fonctionnement ou à l'arrêt peut tourner autour de l'axe d'articulation 5, de façon qu'un axe longitudinal 12 lié à ce propulseur soit horizontal en position normale d'appui et incliné lorsque le propulseur est en appui sur la chenille crantée 4 au niveau du pignon moteur 6 ou à celui du pignon de guidage d'extrémité 7. Un logement aisément accessible est prévu dans le propulseur pour loger un module électronique 13 alimentant et commandant les ensembles moteurs inclus dans ce propulseur et faisant partie desdits moyens de commande.

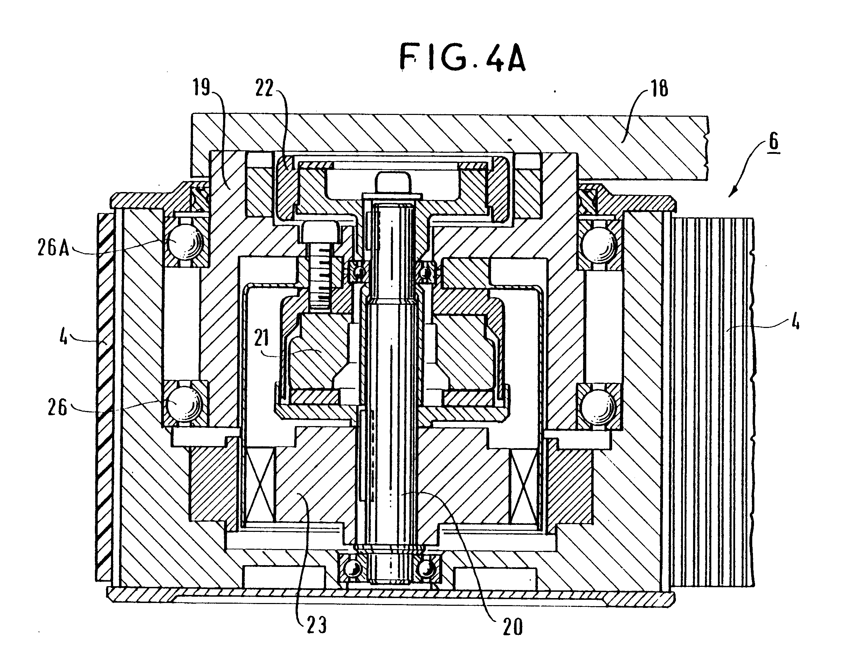

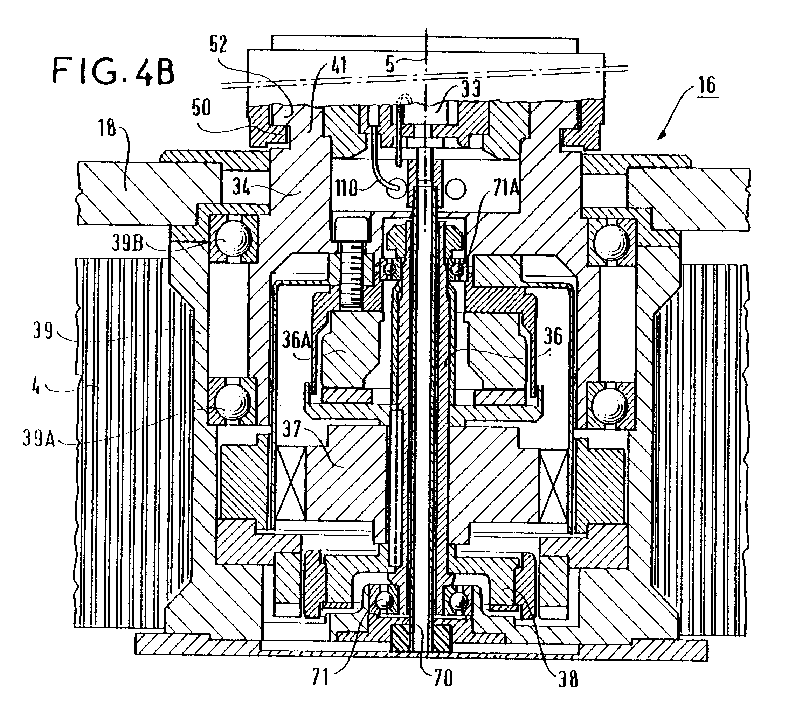

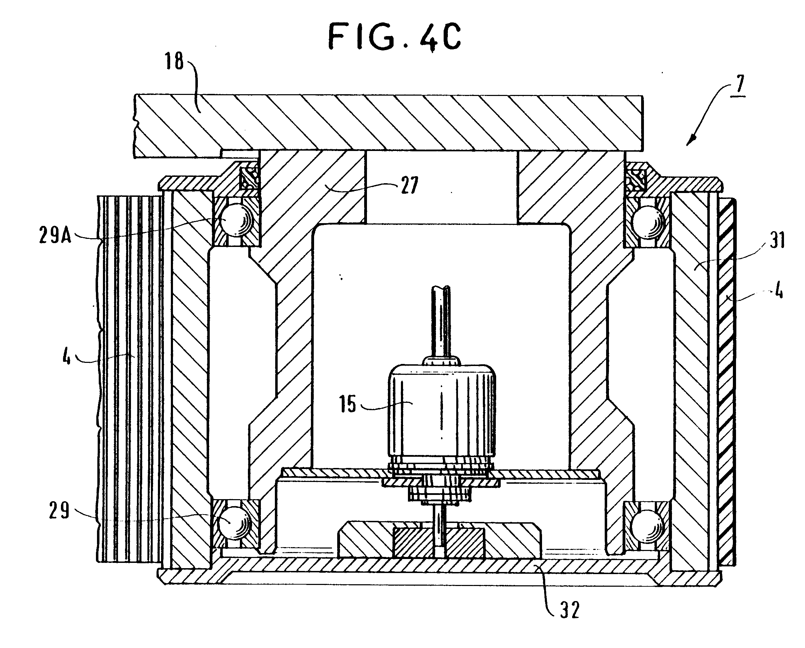

La figure 4 est une vue de dessus en coupe du propulseur 3. Le palonnier est essentiellement constitué d'un corps 18 en forme de plaque sur lequel sont montés le pignon moteur 6, le pignon de guidage d'extrémité 7 et l'articulation 16 munie de son dispositif de fixation 17 sur la structure porteuse 2.

Conformément à la figure 4A le pignon moteur 6 est muni d'un moyeu 19 constituant ledit moyeu d'entraînement et fixé sur le palonnier 18. A l'intérieur du moyeu 19 est monté un axe tournant 20 sur lequel est monté un frein 21, un moteur 22 et un réducteur 23 lié d'une part à l'axe tournant 20 et d'autre part au pignon cranté 6A qui constitue la partie active de l'ensemble formé par le pignon moteur 6 et qui entraîne la chenille 4 qui est munie pour cela de crans en correspondance. Des paliers constitués par des roulements à billes 26 et 26A guident la rotation de ce pignon cranté autour de ce moyeu.

Conformément à la figure 4C, le pignon de guidage d'extrémité 7 est muni d'un moyen tubulaire 27 qui est fixé sur le palonnier 18 et dans le volume central duquel est monté le capteur d'avance 15. A l'extérieur du moyeu 27 des roulements 29 et 29A fixés sur le moyeu 27 guident la rotation que le pignon 7 effectue en étant entraîné par la chenille 4. Un couvercle 32 est fixé sur le pignon 7 et relié à l'axe du capteur 15.

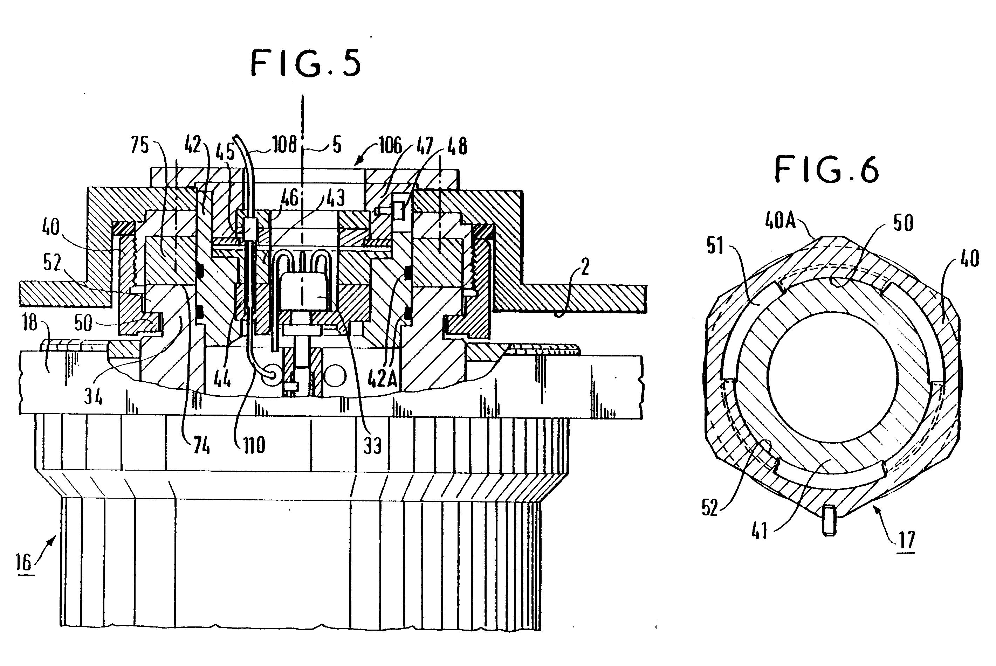

Conformément à la figure 4B, l'articulation 16 comporte un moyeu d'articulation 34 comprenant à son extrémité interne des moyens de fixation sur la structure porteuse 2, qui seront décrits à l'aide de la figure 6. Ce moyeu porte dans son volume central un arbre tubulaire 36 sur lequel est placé un frein 36A. Sur cet arbre tubulaire 36 est fixé également un réducteur 37 qui permet d'abaisser la vitesse de rotation du palonnier à une valeur très inférieure à celle du moteur d'inclinaison 38; Ce réducteur 37 est lui-même couplé au moteur 38 par l'intermédiaire de l'arbre tubulaire 36 positionné sur des paliers constitués par des roulements 71 et 71A. Des roulements à billes 39A et 39B guident le mouvement rotatif de la cage d'articulation 39 autour du moyeu 34. Cette cage 39 est assemblée par vis sur le palonnier 18.

Une tige tubulaire de transmission d'inclinaison 70 est placée à l'intérieur de l'arbre tubulaire 36. Une extrémité de cette tige permet la fixation du capteur d'inclinaison 33 qui permet de connaître instantanément l'inclinaison du palonnier par rapport au corps du véhicule.

La figure 5 est une vue en coupe du dispositif qui permet d'assembler rapidement le palonnier 18 au corps de véhicule 2. Un raccord femelle 40 est monté sur ce corps par un ensemble de pièces annexes permettant une rotation de ce raccord par rapport à ce corps pour permettre la rotation d'assemblage précédemment mentionnée. Le raccord mâle 41 est usiné sur l'extrémité interne du moyeu 34 qui fait saillie du côté interne du palonnier 18 de manière à pouvoir être emboîté dans le raccord femelle 40 à oreilles. Conformément à la figure 6, le moyeu 34 est alors bloqué par ce raccord femelle. Pour cela, lors de la mise en place du propulseur, les trois tenons 52 du raccord mâle 41 sont placés en vis-à-vis des intervalles 51 qui séparent les trois tenons 50 du raccord femelle 40. Après pénétration coaxiale du raccord mâle dans le raccord femelle, on applique au raccord 40, à l'aide d'une clé à fourche plate coopérant avec des méplats 40A formés sur la surface extérieure de ce raccord (voir figure 6), une rotation dudit angle de rotation d'assemblage qui vaut environ 60 degrés. Les faces coniques des tenons 50 du raccord femelle 40 viennent alors coopérer avec les faces coniques des tenons 52 de manière à réaliser le blocage des tenons 50 liés au palonnier contre une face d'appui 74 (visible sur la figure 5) d'une bague 75 liée à la structure porteuse 2. On réalise ainsi une solidarisation du propulseur sur la structure porteuse 2.

Conformément encore à la figure 5 un support 42 en forme de douille circulaire est vissé à l'intérieur d'un alésage du moyeu 34. Il porte un couvercle 43 qui constitue une base pour l'implantation de fiches de connexion électrique femelles 44. Les fiches mâles complémentaires 45 sont fixées sur une base complémentaire constituée par une bague 46 implantée sur un support 47 en forme de douille circulaire, lui-même assemblé coaxialement au raccord femelle 40 sur la structure porteuse 2. Le périmètre d'implantation des fiches est coaxial à ces raccords et comprend 22 connecteurs dont 2 détrompeurs. Les détrompeurs mécanique 48 et électrique (non représentés) permettent d'orienter correctement le propulseur lors de sa mise en place, afin d'effectuer l'assemblage mécanique du palonnier à la structure porteuse ainsi que la connexion électrique des moyens de transmission centraux tels que le fil 108 et périphériques tels que le fil 110. Des joints toriques 42A placés sur le support 42 garantissent l'étanchéité du montage.

Le support circulaire 42 solidaire du moyeu 34 permet de centrer et guider le palonnier par l'intermédiaire de la bague 75 lors de sa mise en place sur la structure porteuse 2.

Les figures 8 et 9 montrent le véhicule d'intervention 1 évoluant sur un plan incliné 55 ; les propulseurs tels que 114 qui sont placés dans la partie haute du plan incliné sont en position horizontale tandis que ceux tels que 3 qui sont placés dans la partie basse du plan incliné sont en position inclinée. On comprendra que toutes les combinaisons d'inclinaison des propulseurs peuvent être utilisées pour répondre aux différentes configurations de sol rencontrées par le véhicule d'intervention lors de son parcours.

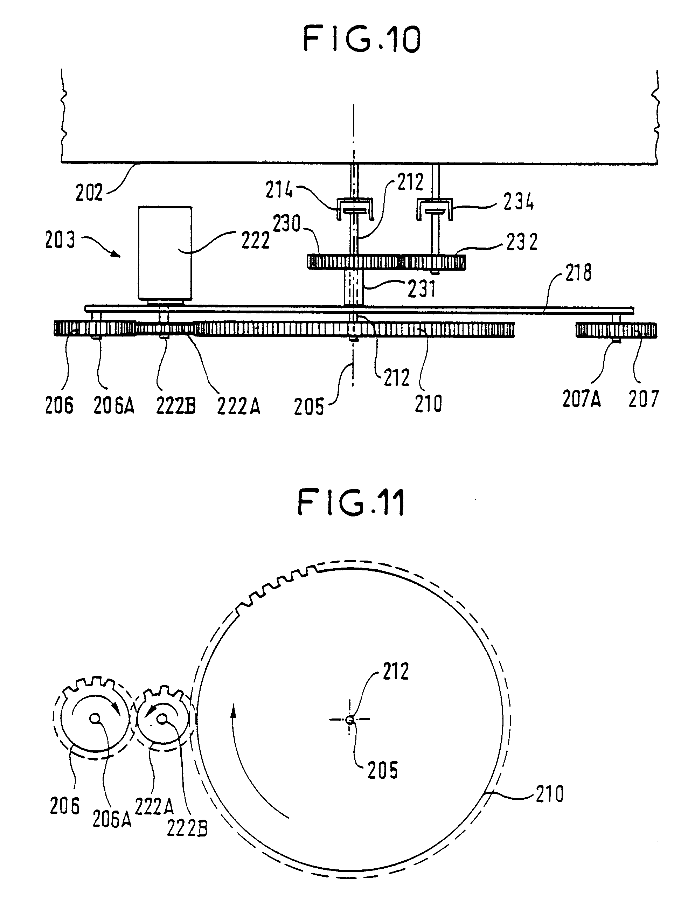

Dans un deuxième véhicule selon la présente invention dont le principe d'agencement mécanique d'un propulseur est représenté partiellement aux figures 10 et 11, les moyens d'entraînement d'inclinaison ne comportent pas de moteur qui leur soit propre. Ce deuxième véhicule met en oeuvre la disposition générale suivante :
Lesdits moyens d'entraînement d'inclinaison 206, 222A, 210 sont des moyens pour faire entraîner en même temps un dit mouvement d'avance et un dit mouvement d'inclinaison par un moteur d'avance 222, ces moyens d'entraînement d'inclinaison étant munis d'un organe d'embrayage commandable 214 qui constitue lesdits moyens d'aide à l'inclinaison et qui embraie ces moyens d'entraînement d'inclinaison en réponse à un signal de commande d'inclinaison, ledit moteur d'avance tournant en réponse à des signaux de commande de moteur d'avance, lesdits moyens de commande centraux (non représentés) fournissant en même temps ledit signal de commande d'inclinaison et un dit signal de commande de moteur d'avance constituant un signal d'aide à l'inclinaison quand un dit mouvement d'inclinaison doit être effectué, et fournissant seulement un dit signal de commande de moteur d'avance constituant un signal de commande d'avance quand ledit véhicule doit être propulsé sans mouvement d'inclinaison.

Plus spécifiquement, conformément à la figure 10, ce deuxième véhicule selon la présente invention comporte un corps de véhicule 202 et quatre propulseurs dont seul l'un 203 est représenté et comporte un palonnier 218 en forme de plaque longitudinale verticale articulée autour d'un axe d'articulation transversal 205.

Ce palonnier porte des axes de pignons 206A et 207A pour porter un pignon moteur 206 et un pignon de guidage d'extrémité 207 sur lesquels est montée une chenille non représentée. Il porte aussi un moteur d'avance 222 muni d'un réducteur et entraînant un pignon primaire 222A tournant autour d'un axe 222B et coopérant avec le pignon moteur 206 et avec un pignon central 210 porté comme les précédents d'un côté externe de ce palonnier. Ce pignon central est muni d'un axe mécanique 212 qui traverse le palonnier selon son axe d'articulation géométrique 205 jusqu'à un organe d'embrayage 214 fixé sur le corps de véhicule 202 pour permettre d'immobiliser cet axe mécanique et le pignon central 210. Cet axe mécanique et ce pignon sont montés en rotation libre par rapport au palonnier 218.

Un pignon de palonnier 230 est fixé sur la face interne du palonnier 218 par un arbre tubulaire 231 et coopère avec un pignon 232 qui est monté rotatif sur le corps de véhicule 202 et qui est muni d'un organe d'embrayage 234 qui permet de l'immobiliser et constitue un frein d'inclinaison. Un frein d'avance non représenté est associé au moteur 222.

La rotation du moteur 222 entraîne un mouvement d'avance par l'intermédiaire des pignons 222A et 206 lorsque d'une part l'organe d'embrayage 214 est débrayé pour laisser le pignon central 210 tourner librement et d'autre part le frein d'inclinaison 230, 232, 234 est bloqué.

Au contraire, lorsque ce frein d'inclinaison est débloqué et l'embrayage 214 embrayé pour bloquer le pignon central 210, la rotation du moteur 222 entraîne d'une part un mouvement d'inclinaison par appui du pignon primaire 222A sur le pignon central fixe 210, d'autre part un mouvement d'avance en sens inverse par l'intermédiaire des pignons 222A et 206.

Dans la pratique, des engrenages intermédiaires sont introduits pour adapter les vitesses de rotation du pignon moteur 206 et du palonnier 218.

Le véhicule d'intervention selon la présente invention présente les avantages suivants :
Il peut évoluer dans un environnement hostile durant plusieurs heures en étant commandé à distance. Son énergie lui est fournie par les batteries stockées dans la structure porteuse qui est exempte de tout organe mécanique. Les informations nécessaires peuvent lui être transmises par des moyens de transmission connus et communément utilisés. Sa conception lui permet d'évoluer et se déplacer dans un élément tel que l'eau, puisqu'il est entièrement étanche. Les composants électroniques sont noyés dans des matériaux appropriés pour les protéger quand le véhicule évolue dans des milieux fortement irradiés.

Le véhicule d'intervention peut être utilisé dans une centrale nucléaire :
. Pour réaliser des inspections routinières,
   - inspection par télévision classique ou en relief,
   - analyse de l'environnement tel que humidité, température, rayonnement, contamination, bruits.
. Intervention sur le réacteur en fonctionnement tel que par exemple :
   - aide à la décision,
   - colmatage d'une fuite sur une tuyauterie,
   - réglage d'une vanne.
. Intervention sur un réacteur à l'arrêt, par exemple après accident, telle que par exemple :
   - décontamination,
   - évacuation de matériels fortement irradiés,
   - mise en place de protection, ou d'écrans,
   - intervention en zone très irradiée,
   - démantélement de la centrale à la fin de sa durée d'utilisation.
   Il peut aussi être utilisé dans l'industrie chimique pour y effectuer par exemple les interventions suivantes :
   - ronde de surveillance d'anomalies,
   - contrôle de l'atmosphère,
   - détection de fumée ou de flammes.

Il peut encore être utilisé dans un établissement pénitencier pour y effectuer une ronde de surveillance sur un circuit prédéterminé ou modifié selon la demande d'un opérateur, pour contrôle d'un point particulier.

Pour toutes ces interventions le véhicule est équipé de manière spécifique, par exemple : bras mobile pour recevoir différents outillages ou moyens de contrôle. Il peut fonctionner automatiquement et a l'aptitude de venir recharger ses batteries selon ses besoins en un point fixe.

Comme le montre la description ci-dessus, ce véhicule d'intervention présente de nombreux avantages. Sa maintenance est rapide et facilitée grâce à la démontabilité rapide des propulseurs. L'indépendance de ces derniers lui permet de franchir des obstacles difficiles qu'un robot de type classique ne pourrait pas franchir. Son caractère modulaire lui permet de pouvoir s'adapter à des cas spécifiques à l'aide de propulseurs chenillés de différentes dimensions.

## Revendications

1. Véhicule à chenilles inclinables par rapport à un axe transversal du véhicule caractérisé par le fait que les mouvements d'inclinaison de la chenille (4) sont aidés par des mouvements d'avances effectués par celle-ci dans un sens de rotation opposé à celui du mouvement d'inclinaison.

2. Véhicule à chenilles inclinables, ce véhicule comportant
- un corps de véhicule (2),
- plusieurs propulseurs (3) assemblés audit corps de véhicule pour exercer des actions de portage et de propulsion dudit véhicule, chacun de ces propulseurs présentant une longueur selon un axe longitudinal (12) et comportant :
- une chenille (4) prenant appui sur le sol et animée d'un mouvement d'avance en boucle dans un plan contenant cet axe longitudinal pour déplacer ce propulseur par rapport au sol,
- des organes de guidage de chenille (6, 7, 9, 10) pour guider ledit mouvement d'avance de ladite chenille,
- un pignon moteur (6) pouvant avoir un mouvement de rotation pour entraîner ledit mouvement d'avance de ladite chenille de manière à réaliser ladite action de propulsion,
- un palonnier (18) pour porter lesdits organes de guidage et ledit pignon moteur (6),
- et des moyens d'assemblage de palonnier pour assembler ce palonnier (18) audit corps de véhicule (2), ces moyens comportant une articulation (16) permettant un mouvement d'inclinaison de ce propulseur par rapport à ce corps par rotation autour d'un axe d'articulation (5) de direction transversale,
- ce véhicule comportant encore :
- des moyens d'entrainement d'avance (22, 23) et des freins d'avance (21) correspondant aux dits propulseurs pour respectivement entraîner et limiter la rotation desdits pignons moteurs (6) de ces propulseurs,
- des moyens d'entrainement d'inclinaison (38, 37, 222A, 210) et des freins d'inclinaison (36A) correspondant auxdits propulseurs pour respectivement entraîner et freiner lesdits palonniers de ces propulseurs dans lesdits mouvements d'inclinaison,
- et des moyens de commande (102, 13) pour fournir des signaux de commande auxdits moyens d'entrainement et freins d'avance et d'inclinaison, ces moyens de commande comportant des moyens de commande centraux (102) portés par ledit corps de véhicule pour fournir des signaux de coordination propres à coordonner les actions de portage et de propulsion desdits propulseurs,
ce véhicule étant caractérisé par le fait qu'il comporte des moyens d'aide à l'inclinaison (130) qui agissent chaque fois que lesdits moyens d'entrainement d'inclinaison (38, 37) correspondant à un propulseur (3) sont commandés pour provoquer un dit mouvement d'inclinaison présentant un sens de rotation, ces moyens d'aide à l'inclinaison agissant alors pour faire tourner ledit pignon moteur (6) correspondant à ce propulseur dans le sens de rotation qui est opposé à celui dudit mouvement d'inclinaison dudit palonnier (18) de ce propulseur.

3. Véhicule selon la revendication 2, caractérisé par le fait que lesdits moyens d'aide à l'inclinaison (130) agissent pour faire tourner ledit pignon moteur (6) à une vitesse au moins égale à une vitesse neutre qui éviterait tout glissement de ladite chenille (4) par rapport au sol pendant ledit mouvement d'inclinaison.

4. Véhicule selon la revendication 3, caractérisé par le fait que lesdits moyens d'entraînement d'inclinaison (38, 37) comportent des moteurs d'inclinaison (38) commandés par lesdits moyens de commande (102, 13) pour entraîner lesdits mouvements d'inclinaison, lesdits moyens d'entrainement d'inclinaison et ledit frein d'inclinaison (36A) correspondant à un même dit propulseur constituant un ensemble moteur d'inclinaison correspondant à ce propulseur, lesdits moyens d'entraînement d'avance de ce propulseur comportant un moteur d'avance (22, 23) qui constitue, avec ledit frein d'avance (21), un ensemble moteur d'avance (21, 22, 23), lesdits moyens de commande (102) comportant, en correspondance avec chaque dit propulseur (3) :
- une sortie d'avance (132) pour fournir un signal de commande d'avance,
- une sortie d'inclinaison (134) pour fournir un signal de commande d'inclinaison,
- et un circuit d'aide à l'inclinaison (130) pour recevoir ledit signal de commande d'inclinaison, et pour fournir en réponse un signal d'aide à l'inclinaison éventuellement combiné audit signal de commande d'avance, ce circuit constituant partiellement lesdits moyens d'aide à l'inclinaison,
- ledit véhicule comportant encore, en correspondance avec chacun desdits propulseurs, des moyens (108, 110, 44, 45),
pour transmettre lesdits signaux de commande d'avance et d'aide à l'inclinaison audit ensemble moteur d'avance (22, 23) et ledit signal de commande d'inclinaison audit ensemble moteur d'inclinaison (38, 37).

5. Véhicule selon la revendication 4, caractérisé par le fait que ledit circuit d'aide à l'inclinaison (130) fournit ledit signal d'aide à l'inclinaison sous la forme d'un signal de commande de vitesse imposant audit ensemble moteur d'avance (22, 23) d'entraîner ledit pignon moteur (6) à une vitesse d'aide à l'inclinaison déterminée par lesdits moyens de commande (102).

6. Véhicule selon la revendication 4, caractérisé par le fait que ledit circuit d'aide à l'inclinaison (130) fournit ledit signal d'aide à l'inclinaison sous la forme d'un signal de commande de couple imposant audit ensemble moteur d'avance (22, 23) d'appliquer audit pignon moteur (6) un couple déterminé par lesdits moyens de commande (102).

7. Véhicule selon la revendication 3, caractérisé par le fait que lesdits moyens d'entraînement d'inclinaison (222A, 210) sont des moyens pour faire entraîner en même temps un dit mouvement d'avance et un dit mouvement d'inclinaison par ledit moteur d'avance (222), ces moyens d'entraînement d'inclinaison étant munis d'un organe d'embrayage commandable (214) qui constitue lesdits moyens d'aide à l'inclinaison et qui embraie ces moyens d'entraînement d'inclinaison en réponse à un signal de commande d'inclinaison, ledit moteur d'avance tournant en réponse à des signaux de commande de moteur d'avance, lesdits moyens de commande centraux fournissant en même temps ledit signal de commande d'inclinaison et un dit signal de commande de moteur d'avance constituant un signal d'aide à l'inclinaison quand un dit mouvement d'inclinaison doit être effectué, et fournissant seulement un dit signal de commande de moteur d'avance constituant un signal de commande d'avance quand ledit véhicule doit être propulsé sans dit mouvement d'inclinaison.

## Patentansprüche

1. Fahrzeug mit in bezug auf eine Querachse desselben neigbaren Gleisketten, dadurch gekennzeichnet, daß die Neigungsbewegungen der Gleiskette (4) durch von dieser ausgeführte Vorwärtsbewegungen in einer der Richtung der Neigungsbewegung entgegengesetzten Drehrichtung unterstützt werden.

2. Fahrzeug mit neigbaren Gleisketten, wobei dieses Fahrzeug versehen ist mit
- einem Fahrzeugkörper (2),
- mehreren Vortriebsmitteln (3), die am Körper des Fahrzeugs montiert sind, um für das Fahrzeug Unterstützungs- und Vortriebswirkungen auszuüben, wobei jedes dieser Vortriebsmittel entlang einer Längsachse (12) orientiert ist und umfaßt:
- eine Gleiskette (4), die sich auf dem Boden abstützt und zu einer geschlossenen Vorwärtsbewegung in einer diese Längsachse enthaltenden Ebene angetrieben wird, um dieses Vortriebsmittel in bezug auf den Boden zu verschieben,
- Gleisketten-Führungselemente (6, 7, 9, 10), um die Vorwärtsbewegung der Gleiskette zu führen,
- ein Antriebsritzel (6), das sich in Drehrichtung bewegen kann, um die Vorwärtsbewegung der Gleiskette zu erzeugen, derart, daß die Vortriebswirkung verwirklicht wird,
- einen Querträger (18) zum Tragen der Führungselemente und des Antriebsritzels (6),
- und Querträger-Montagemittel zum Anbringen dieses Querträgers (18) am Körper des Fahrzeugs (2), wobei diese Mittel ein Gelenk (16) aufweisen, das eine Neigungsbewegung dieses Vortriebsmittels in bezug auf diesen Körper durch Drehung um eine Schwenkachse (5) in Querrichtung gestattet,
- wobei dieses Fahrzeug außerdem versehen ist mit:
- Vorwärtsantriebsmitteln (22, 23) und Vorwärtsbremsen (21), die den Vortriebsmitteln entsprechen, um die Drehung der Antriebsritzel (6) dieser Vortriebsmittel zu bewirken oder zu begrenzen,
- Neigungsantriebsmittel (38, 37, 222A, 210) und Neigungsbremsen (36A), die den Vortriebsmitteln entsprechen, um die Querträger dieser Vortriebsmittel hinsichtlich der Neigungsbewegungen anzutreiben bzw. zu bremsen,
- und Steuermittel (102, 13) zum Liefern von Steuersignalen an die Antriebs- und Bremsmittel für die Vorwärts- und die Neigungsbewegungen, wobei diese Steuermittel zentrale Steuermittel (102) aufweisen, die vom Körper des Fahrzeugs getragen werden, um Koordinationssignale zu liefern, die dazu geeignet sind, die Unterstützungs- und Vortriebswirkungen der Vortriebsmittel zu koordinieren,
wobei dieses Fahrzeug dadurch gekennzeichnet ist, daß es Mittel für die Unterstützung der Neigung (130) aufweist, die jedesmal eingreifen, wenn die einem Vortriebsmittel (3) entsprechenden Neigungsantriebsmittel (38, 37) gesteuert werden, um eine einen Drehsinn besitzende Neigungsbewegung zu bewirken, wobei diese Mittel zur Neigungsunterstützung so eingreifen, daß sie das diesem Vortriebsmittel entsprechende Antriebsritzel (6) in derjenigen Drehrichtung drehen, die derjenigen der Neigungsbewegung des Querträgers (18) dieses Vortriebsmittels entgegengesetzt ist.

3. Fahrzeug gemäß Anspruch 2, dadurch gekennzeichnet, daß die Mittel zur Neigungsunterstützung (130) so wirken, daß sie das Antriebsritzel (6) mit einer Geschwindigkeit drehen, die wenigstens gleich einer neutralen Geschwindigkeit ist, die jegliches Gleiten der Gleiskette (4) in bezug auf den Boden während der Neigungsbewegung vermeidet.

4. Fahrzeug gemäß Anspruch 3, dadurch gekennzeichnet, daß die Neigungsantriebsmittel (38, 37) Neigungsmotoren (38) aufweisen, die von den genannten Steuermitteln (102, 13) gesteuert werden, um die Neigungsbewegungen zu erzeugen, wobei die Neigungsantriebsmittel und die Neigungsbremse (36A), die demselben Vortriebsmittel entsprechen, eine diesem Vortriebsmittel entsprechende Neigungsmotoreinheit bilden, wobei die Vorwärtsantriebsmittel dieses Vortriebsmittels einen Vorwärtsmotor (22, 23) aufweisen, der mit der Vorwärtsbremse (21) eine Vorwärtsmotoreinheit (21, 22, 23) bildet, wobei die Steuermittel (102) in Korrespondenz mit jedem Vortriebsmittel (3) versehen sind mit:
- einem Vorwärtsausgang (132) für die Lieferung eines Vorwärtssteuersignals,
- einem Neigungsausgang (134) für die Lieferung eines Neigungssteuersignals,
- und einer Neigungsunterstützungsschaltung (130), die das Neigungssteuersignal empfängt und daraufhin ein Neigungsunterstützungssignal liefert, welches eventuell mit dem Vorwärtssteuersignal kombiniert ist, wobei diese Schaltung zum Teil die Neigungsunterstützungsmittel bildet,
- wobei das Fahrzeug außerdem in Korrespondenz mit jedem der Vortriebsmittel Mittel (108, 110, 44, 45) umfaßt, um die Vorwärtssteuersignale und die Neigungsunterstützungssignale an die Vorwärtsmotoreinheit (22, 23) und das Neigungssteuersignal an die Neigungsmotoreinheit (38, 37) zu übertragen.

5. Fahrzeug gemäß Anspruch 4, dadurch gekennzeichnet, daß die Neigungsunterstützungsschaltung das Neigungsunterstützungssignal in Form eines Geschwindigkeitssteuersignals liefert, das der Vorwärtsmotoreinheit (22, 23) befiehlt, das Antriebsritzel (6) mit einer von den Steuermitteln (102) bestimmten Neigungsunterstützungsgeschwindigkeit anzutreiben.

6. Fahrzeug gemäß Anspruch 4, dadurch gekennzeichnet, daß die Neigungsunterstützungsschaltung (130) das Neigungsunterstützungssignal in Form eines Drehmoment-Steuersignals liefert, das der Vorwärtsmotoreinheit (22, 23) befiehlt, an das Antriebsritzel (6) ein von den Steuermitteln (102) bestimmtes Drehmoment anzulegen.

7. Fahrzeug gemäß Anspruch 3, dadurch gekennzeichnet, daß die Neigungsantriebsmittel (222A, 210) Mittel sind, um gleichzeitig eine Vorwärtsbewegung und eine Neigungsbewegung für den Vorwärtsmotor (222) zu erzeugen, wobei diese Neigungsantriebsmittel mit einem steuerbaren Kupplungselement (214) versehen sind, das die Neigungsunterstützungsmittel bildet und diese Neigungsantriebsmittel aufgrund eines Neigungssteuersignals einkuppelt, wobei sich der Vorwärtsmotor aufgrund von Steuersignalen für den Vorwärtsmotor dreht, wobei die zentralen Steuermittel gleichzeitig das Neigungssteuersignal und ein das Neigungsunterstützungssignal bildendes Vorwärtsmotorsteuersignal liefern, wenn eine Neigungsbewegung ausgeführt werden soll, und ausschließlich ein Vorwärtsmotorsteuersignal liefern, welches ein Vorwärtssteuersignal bildet, wenn das Fahrzeug ohne Neigungsbewegung vorwärts bewegt werden soll.

## Claims

1. Vehicle with tracks inclinable relative to a transverse axis of the vehicle characterised in that inclination of the track (4) is assisted by propulsion movement of the track in a rotation direction opposite that of the inclination movement.

2. Vehicle with inclinable tracks comprising:
- a vehicle body (2),
- a plurality of propulsion units (3) assembled to said vehicle body to support and propel said vehicle, each propulsion unit having a generally elongate shape with a longitudinal axis (12) and comprising:
- a track (4) resting on the ground and driven in a closed loop around the propulsion unit in a plane containing the aforementioned longitudinal axis to move the propulsion unit relative to the ground,
- track guide members (6, 7, 9, 10) to guide movement of said track,
- a drive sprocket wheel (6) to drive said propulsion movement of said track so as to bring about said propulsion action,
- a swing-arm (18) carrying said guide members and said drive sprocket wheel (6),
- means for assembling the swing-arm (18) to said vehicle body (2) comprising an articulation (16) enabling inclination of the swing-arm relative to the body by rotation about a transverse articulation axis (5),
- propulsion drive systems (22, 23) and propulsion brakes (21) corresponding to said propulsion units for respectively driving and limiting the rotation of said drive sprocket wheels (6) of said propulsion units,
- inclination drive systems (38, 37, 222A, 210) and inclination brakes (36A) corresponding to said propulsion units for respectively driving and braking inclination movement of said swing-arms of said propulsion units, and
- control means (102, 13) supplying control signals to said propulsion and inclination drive systems and brakes and including central control means (102) carried by said vehicle body to supply coordination signals adapted to coordinate the support and propulsion actions of said propulsion units,
this vehicle being characterised in that it comprises inclination assistance means (130) which operate whenever said inclination drive means (38, 37) corresponding to a propulsion unit (3) are commanded to cause an inclination movement having a rotation direction, the inclination assistance means then operating to turn said drive sprocket wheel (6) corresponding to this propulsion unit in the rotation direction opposite to that of said inclination movement of said swing-arm (18) of this propulsion unit.

3. Vehicle according to claim 2 characterised in that said inclination assistance means (130) operate to cause said drive sprocket wheel (6) to turn at a speed at least equal to a neutral speed that would avoid any slipping of said track (4) relative to the ground during said inclination movement.

4. Vehicle according to claim 3 characterised in that said inclination drive means (38, 37) comprise inclination motors (38) controlled by said control means (102, 13) to drive said inclination movement, said inclination drive means and said inclination brake (36A) corresponding to the same propulsion unit constituting an inclination drive system corresponding to that propulsion unit, said propulsion drive means of that propulsion unit comprising a propulsion drive (22, 23) constituting with said propulsion brake (21) a propulsion drive system (21, 22, 23), said control means (102) comprising, in corresponding relationship to each propulsion unit (3):
- a propulsion output (132) adapted to supply a propulsion control signal,
- an inclination output (134) adapted to supply an inclination control signal, and
- an inclination assistance circuit (130) adapted to receive said inclination control signal and to respond thereto by supplying an inclination assistance signal optionally combined with said propulsion control signal, this circuit constituting part of said inclination assistance means,
- said vehicle further comprising, in corresponding relationship to each of said propulsion units, means (108, 110, 44, 45) for transmitting said propulsion control and inclination assistance signals to said propulsion drive system (22, 23) and said inclination control signal to said inclination drive system (38, 37).

5. Vehicle according to claim 4 characterised in that said inclination assistance circuit (130) supplies said inclination assistance signal in the form of a speed control signal requiring said propulsion drive system (22, 23) to drive said drive sprocket wheel (6) at an inclination assistance speed determined by said control means (102).

6. Vehicle according to claim 4 characterised in that said inclination assistance circuit (130) supplies said inclination assistance signal in the form of a torque control signal requiring said propulsion drive system (22, 33) to apply to said drive sprocket wheel (6) a torque determined by said control means (102).

7. Vehicle according to claim 3 characterised in that said inclination drive means (222A, 210) are means for driving simultaneously a propulsion movement and an inclination movement by said propulsion drive (222), these inclination drive means including a selectively operable clutch (214) constituting said inclination assistance means and which is adapted to engage said inclination drive means in response to an inclination control signal, said propulsion drive operating in response to propulsion drive control signals, said central control means supplying simultaneously said inclination control signal and said propulsion drive control signal constituting an inclination assistance signal when an inclination movement must be performed and supplying only a propulsion drive control signal constituting a propulsion control signal when said vehicle must be propelled without any inclination movement.
